# EUROPEAN PATENT SPECIFICATION

(11) **EP 0 949 328 B1**
(45) Date of publication and mention of the grant of the patent: **07.01.2004**
(21) Application number: 98830215.4
(22) Date of filing: 08.04.1998
(51) Int. Cl.: C12C 1/00, C12G 3/02, C12C 5/02

(54) **Gluten-free beer containing rice malt and buck wheat**
Glutenfreies Bier mit Reismalz und Buchweizen
Bière sans gluten avec du blé noir et du malt de riz

(43) Date of publication of application: 13.10.1999
(73) Proprietor: Heineken Italia S.p.A., 11020 Pollein (Aosta) (IT); Heinz Italia S.r.l., Latina (IT)
(72) Inventor: Maccagnan, Giovanni, 41058 Vignola, Modena (IT); Pat, Antonio, 32032 Feltre, Belluno (IT); Collavo, Francesco, 32031 Alano Di Piave, Belluno (IT); Ragg, Gian Luca, 20133 Milano (IT); Bellini, Marina Pieranna, 20151 Milano (IT)
(74) Representative: Falcetti, Carlo

(56) References cited:
- FR-A- 2 707 996
- GB-A- 1 184 032
- GB-A- 1 387 998
- PATENT ABSTRACTS OF JAPAN vol. 015, no. 353 (C-0865), 6 September 1991 & JP 03 139272 A (SHIGA PREF GOV KEIZAI NOGYO KYODO KUMIAI RENGOKAI), 13 June 1991
- PATENT ABSTRACTS OF JAPAN vol. 014, no. 459 (C-0767), 4 October 1990 & JP 02 186973 A (SUEHIRO SYUZO KK), 23 July 1990
- DATABASE WPI Section Ch, Week 9744 Derwent Publications Ltd., London, GB; Class D16, AN 97-478221 XP002094590 & RU 2 076 145 C (MOSC DRINKS EXPER WKS) , 27 March 1997
- DATABASE WPI Week 199747, Derwent Publications Ltd., London, GB; Class B04, AN 1997-504325, XP002083601 & CN 1 124 287 A (SHU Z) 12 March 1996

## Description

The present invention relates to a new type of beer which can be tolerated by celiac disease sufferers.

Celiac disease is characterized by persistent intolerance to gluten, which induces atrophy of the jejunal villi with hyperplasia of the crypts and poor absorption of many nutrient substances, with the consequent clinical signs and symptoms, such as weight loss, diarrhoea, abdominal swelling, anaemia caused by lack of iron or vitamins, osteoporosis. Epidemiological studies carried out in Europe reported a prevalence of celiac disease in adults of 1:950 in Sweden and 1:1700 in Scotland. These data are based on symptomatic and diagnosed cases, but it is commonly believed that the actual prevalence of celiac disease is considerably higher and that, in the general population, it is close to 1:300.

Celiac disease sufferers must thus avoid consuming gluten-containing aliments such as, for example, beer; beer is an aliment produced by alcoholic fermentation of sugary wort, prepared by diastasic saccharification of barley starch, optionally supplemented with other types of cereals (adjuncts). However, barley contains a large amount of gluten and thus makes beer an aliment which must be excluded at all cost from the diet of celiac disease sufferers.

The problem underlying the present invention is thus to provide a new beer which can be consumed by this sizeable proportion of the population and at the same time has organoleptic properties and an appearance comparable with those of beer made from barley malt.

Gluten free beverages (for instance the Japanese "saké" and the so called South African beer) are known, but their organoleptic properties and appearance are quite different from those of beer made from barley malt.

It is also known in the art that, to reduce the product cost, adjuncts can be added to barley malt, which are inherently gluten-free.

For example JP 03 139272-A proposes the use of germinated rice (rice malt) as an adjunct to barley malt.

Another example is given by CN 1124287 (Chinese Pat. Appl. 1994CN-0118781) which proposes the use of buck wheat as an adjunct to barley malt.

However the feasibility problem of providing a gluten-free beer, hence without barley, which at the same time tastes and looks like a barley beer has not been considered and solved.

This problem is solved, according to the invention, by a beer which is characterized in that it is free of gluten and it is obtained from a mixture of gluten free starting materials comprising buck wheat, rice malt and an. additional component chosen from the group consisting of corn, sorghum and millet syrup.

The rice malt is present in amounts of at least 5% by weight.

Among the gluten-free starting raw materials, it is found that buck wheat has suitable beer making properties, as regards both appearance and taste, and can thus be used as a replacement for barley.

However, buck wheat does not contain the enzymes required to hydrolyse starch to maltose, and this makes it necessary to add rice malt, which is in itself gluten-free. It has also proved advantageous to replace these cereals with syrups thereof; this replacement makes it possible to dispense with the step of saccharification of the starch contained in the added cereal, thereby making the process simpler and more cost-effective.

Advantageously, the beer according to the invention is obtained from a mixture comprising corn syrup as additive.

One particularly advantageous embodiment envisages the use of buck wheat, rice malt and corn syrup in a weight ratio of 20/60/20.

In an alternative embodiment, the buck wheat, the rice malt and the corn are present in the said starchy starting material mixture in a weight ratio of 40/10/50. In this case, since the amount of rice malt is relatively low, it turns out to be necessary to add amylolytic enzymes and glucanase to the mixture of starting materials, in order to obtain a product with optimum sugar and alcohol contents.

In any case, the presence of these enzymes is always preferable, even if not necessary, since they allow a product with standardized properties to be obtained, independently of the amount of enzymes present in the rice malt.

α-Amylase is preferably used as amylolytic enzyme. This enzyme is capable of cleaving starch molecules at any point, giving rise to dextrins, which are readily saccharifiable molecular structures.

In the case where the mixture of starting materials might not necessarily have a sufficient amount of water-soluble proteins to give the beer obtained therefrom the required organoleptic properties, such as, for example, a head, consistency, the starting mixture may contain a protease which is capable of making some of the protein content of the cereals water-soluble.

The present invention also relates to a method for preparing the beer according to the invention, this method comprising a step of saccharifying a mixture of starting materials comprising buck wheat, rice malt and optionally a component chosen from the group comprising corn, sorghum, millet and/or syrups thereof.

Amylolytic enzymes and glucanase are optionally added to the said mixture, these enzymes making it possible to shorten and standardize the saccharification times, which would otherwise vary from time to time depending on the concentrations of the enzymes present in the rice malt.

The beer according to the present invention has the great advantage of being entirely gluten-free and thus of being able to be consumed by celiac disease sufferers without giving rise to the abovementioned undesired effects, and at the same time having organoleptic properties and an appearance which are entirely comparable with those of beer made from barley malt. Not only the odour and the taste, but also the amount and the consistency of the head formed when the beer is poured into a glass, are entirely similar to those of conventional beer.

Two preferred embodiments of the invention will now be described, by way of examples given to allow a better understanding of the invention to be gained.

### Example 1

500 kg of rice malt, 2150 kg of buck wheat, 3.5 kg of calcium chloride, 4 kg of calcium sulphate, 13 kg of caramel (EU category E150C) and 9 m³ of water are mashed in a copper for a period of 30 min and at a temperature of 50°C. 4.5 kg of α-amylase are added to the mash thus obtained, which is then raised to 78°C over a period of 15 min, left at this temperature for a period of 15 min and then brought to the boiling point and left at that temperature for 30 min. Next, the mixture is cooled to 64°C by addition of 6.5 m³ of water. 5 litres of ortho-phosphoric acid are also added, giving the mixture a pH of 5.6 ± 0.1. The contents of the copper are transferred into a mash tun, into which 4.5 kg of a mixture of α-amylase and glucanase (1:1) and 4.5 kg of protease are added. At this point the saccharification stage begins, during which the starches contained in the buck wheat are converted into fermentable sugars by means of the enzymes contained in the rice malt, and the mixture remains at a temperature of 64°C for 30 min.

The temperature is then raised to 72°C over a period of 15 min and is held at this value for 25 min; the temperature is then brought to 76°C (ideal temperature for the filtration) and is held at this value for 10 min. At this point, the liquid (first wort) is separated out and about 10 m³ of water are then added in order to extract all of the sugar from the mash. The filtrate thus obtained is transferred into the cooking copper and 3 m³ of water and 2650 kg of corn syrup are added (buck wheat/rice malt/corn syrup ratio = 40/10/50).

The mixture thus obtained is boiled until 7-8% of the total mass has evaporated off.

As soon as the mixture begins to boil, 4 kg of HNB hop extract with 30% of alpha acids and 6 litres of ortho-phosphoric acid are added in order to give the solution a pH of 5.2 ± 0.1. After boiling for 40 minutes, a further 10 kg of Pel.T90 hops are added. The product thus obtained is then transferred into a whirlpool in order to separate the coagulated proteins and the hop grain from the liquid phase.

This gives a wort which is ready for fermentation. To this end, the wort is cooled to a temperature of 13°C, aerated with 10 ppm of oxygen and *Saccharomyces carlsbergensis* yeast is added, which is purified beforehand of any possible trace of gluten, by means of repeated washing with water, and in solution to a concentration of 50% (one litre per one hundred litres of wort, so as to obtain a density of 16 million cells/ml).

The initial fermentation temperature is 13°C but rises to 14°C in the first 12 hours. The liquid then remains at this temperature until a value of 5°P is reached, after which the temperature is allowed to rise to a maximum of 16°C, where it remains until the fermentation is complete and a total diacetyl concentration of < 0.15 ppm is reached (168-192 hours).

The beer is then separated from the yeast, transferred and matured by conventional techniques.

The gluten-free beer thus obtained has the following characteristics:

| | | | |
|---|---|---|---|
| Original gravity (%w) | 11.30 | pH | 4.1 |
| Original gravity (%v) | 11.79 | Head retention (sec) | 250 |
| Real extract (%v) | 3.75 | Colour (EBC) | 6.0 |
| Apparent extract (%v) | 1.90 | Bitterness (EBU) | 20 |
| Alcohol (%v) | 5.0 | Total nitrogen (mg/l) | 200 |
| Limit attenuation (%) | 87.0 | CO₂ (g/l) | 5.5 |

### Example 2

The process described in Example 1 is repeated with the same experimental methods and procedures, only changing the amount of the main components, i.e. in the still: 1332 kg of buck wheat, 1332 kg of corn syrup; 500 kg of rice malt; 3496 kg of rice malt are added to the mash tun.

Amylolytic enzymes and glucanase are not added in this example due to the large amount of rice malt used.

The gluten-free beer thus obtained has the following characteristics:

| | | | |
|---|---|---|---|
| Original gravity (%w) | 11.30 | pH | 4.1 |
| Original gravity (%v) | 11.79 | Head retention (sec) | 250 |
| Real extract (%v) | 3.75 | Colour (EBC) | 6.0 |
| Apparent extract (%v) | 1.90 | Bitterness (EBU) | 20 |
| Alcohol (%v) | 5.0 | Total nitrogen (mg/l) | 200 |
| Limit attenuation (%) | 87.0 | CO₂ (g/l) | 5.5 |

## Claims

1. A gluten-free beer obtainable from a mixture of gluten free starting materials comprising buck wheat, rice malt in an amount of at least 5% by weight and a syrup chosen from the group consisting of corn, sorghum and millet syrup.

2. A beer according to claim 1, in which said syrup is corn syrup.

3. A beer according to claim 2, in which said mixture of staring materials comprises buck wheat, rice malt and corn syrup in a weight ratio of 20/60/20.

4. A beer according to any one of the preceding claims, in which said mixture of staring material comprises amylolytic enzymes and glucanase.

5. A beer according to claim 4, in which said mixture of staring materials comprises buck wheat, rice malt and corn syrup in a weight ratio of 40/10/50.

6. A beer according to any one of the preceding claims, in which said mixture of staring materials comprises a protease.

7. A method for producing a gluten-free beer from a mixture of starting materials comprising buck wheat, rice malt in an amount of at least 5% by weight and a syrup chosen from the group consisting of corn, sorghum and millet syrup, comprising the step of saccharifying said mixture.

8. The method of claim 7 in which amylolytic enzymes and glucanase are added to said mixture.

9. The method of claim 7 or 8 in which protease enzymes are added to said mixture.

## Patentansprüche

1. Glutenfreies Bier, welches aus einer Mischung von glutenfreien Startmaterialen erhältlich ist, die aus Buchweizen, Reismalz in einer Menge von zumindest 5 Gewichtsprozent und einem Sirup bestehen, der aus der Gruppe gewählt ist, die aus Mais, Sorghum und Ripsenhirse besteht.

2. Bier nach Anspruch 1, bei dem dieser Sirup ein Mais-Sirup ist.

3. Bier nach Anspruch 2, bei dem die Mischung aus Startmaterialien Buchweizen, Reismalz und Mais-Sirup in einem Gewichtsverhältnis von 20/60/20 umfasst.

4. Bier nach einem der vorhergehenden Ansprüche, bei dem die Mischung aus Startmaterialien amylolytischen Enzyme und Glukanese umfasst.

5. Bier nach Anspruch 4, bei dem die Mischung aus Startmaterialien Buchweizen, Reismalz und Mais-Sirup in einem Gewichtsverhältnis von 40/10/50 umfasst.

6. Bier nach einem der vorhergehenden Ansprüche, bei dem die Mischung aus Startmaterialien eine Protease umfasst.

7. Verfahren zum Erzeugen eines glutenfreien Biers aus einer Mischung von Startmaterialien, die Buchweizen, Reismalz in einer Menge von zumindest 5 Gewichtsprozent und einen Sirup aus der Gruppe umfasst, die aus Mais, Sorghum und Ripsenhirsesirup besteht, welches folgenden Schritt aufweist:
Süßen der Mischung.

8. Verfahren nach Anspruch 7, bei dem amylolytische Enzyme und Glukanese der Mischung hinzugefügt werden.

9. Verfahren nach Anspruch 7 oder 8, bei dem Protease-Enzyme der Mischung hinzugefügt werden.

## Revendications

1. Bière sans gluten susceptible d'être obtenue à partir d'un mélange de matières premières sans gluten comprenant du sarrasin, du malt de riz en une quantité d'au moins 5% en poids et un sirop choisi dans le groupe constitué par les sirops de maïs, de sorgho et de millet.

2. Bière selon la revendication 1, dans laquelle ledit sirop est du sirop de mais.

3. Bière selon la revendication 2, dans laquelle ledit mélange de matières premières comprend du sarrasin, du malt de riz et du sirop de mais dans un rapport pondéral de 20/60/20.

4. Bière selon l'une quelconque des revendications précédentes, dans laquelle ledit mélange de matières premières comprend des enzymes amylolytiques et de la glucanase.

5. Bière selon la revendication 4, dans laquelle ledit mélange de matières premières comprend du sarrasin, du malt de riz et du sirop de maïs dans un rapport pondéral de 40/10/50.

6. Bière selon l'une quelconque des revendications précédentes, dans laquelle ledit mélange de matières premières comprend une protéase.

7. Procédé de production d'une bière sans gluten à partir d'un mélange de matières premières comprenant du sarrasin, du malt de riz en une quantité d'au moins 5% en poids et un sirop choisi dans le groupe constitué par les sirops de mais, de sorgho et de millet, comprenant l'étape consistant à saccharifier ledit mélange.

8. Procédé selon la revendication 7, dans lequel des enzymes amylolytiques et de la glucanase sont ajoutées audit mélange.

9. Procédé selon la revendication 7 ou 8, dans lequel des enzymes protéases sont ajoutées audit mélange.
